# EUROPEAN PATENT APPLICATION

(11) **EP 3 456 204 A1**
(43) Date of publication of application: **20.03.2019**
(21) Application number: 18197983.2
(22) Date of filing: 30.12.2014
(51) Int. Cl.: A23G 4/04, A23G 4/20

(54) **ADVANCED GUM FORMING**

(30) Priority: 31.12.2013 US 201361922223 P
(62) Divisional of application: 14824334.8
(71) Applicant: Intercontinental Great Brands LLC, East Hanover, NJ 07936 (US)
(72) Inventor: JANI, Bharat, Whippany, NJ New Jersey 07981 (US); SCAROLA, Leonard, Whippany, NJ New Jersey 07981 (US)
(74) Representative: Boult Wade Tennant LLP

(57) **Abstract**

Disclosed is a method of forming chewing gum, the method including providing a sizing device configured to size a gum mass into a gum sheet of a desirable width, providing a collecting device upstream of the sizing device, the collecting device including at least a first compartment and a second compartment, the first and second compartments being separated by separator, inputting a first gum mass into the first compartment and a second gum mass into the second compartment, outputting the first gum mass and the second gum mass from the collecting device to the sizing device, and sizing the first gum mass and the second gum mass into a gum sheet of a substantially uniform thickness, the gum sheet including the first gum mass and the second gum mass.

## Description

### FIELD OF THE INVENTION

The present invention relates to gum manufacturing methods and systems and more particularly relates to gum forming systems and methods.

### BACKGROUND OF THE INVENTION

Typically, the process of making and packaging confection and gum products is time-consuming and involves a significant amount of machinery. This can be particularly true when the product being made is intended to have a plurality of layers of the same or differing composition, which can pose unique challenges. For example, manufacturing of a multilayer confectionery product including a chewing gum layer can introduce additional processing challenges as the gum making process is typically time-consuming and involves a significant amount of machinery.

The present invention therefore relates to improvements in systems and methods of forming multilayer confectionery products.

### BRIEF SUMMARY OF THE INVENTION

Disclosed is a method of forming chewing gum, the method including providing a sizing device configured to size a gum mass into a gum sheet of a desirable width, providing a collecting device upstream of the sizing device, the collecting device including at least a first compartment and a second compartment, the first and second compartments being separated by separator, inputting a first gum mass into the first compartment and a second gum mass into the second compartment, outputting the first gum mass and the second gum mass from the collecting device to the sizing device, and sizing the first gum mass and the second gum mass into a gum sheet of a substantially uniform thickness, the gum sheet including the first gum mass and the second gum mass.

Also disclosed is a method of forming comestible, the method including providing a sizing device configured to size a comestible mass into a comestible sheet of a desirable width, providing a collecting device upstream of the sizing device, the collecting device including at least a first compartment and a second compartment, the first and second compartments being separated by separator, inputting a first comestible mass into the first compartment and a second comestible mass into the second compartment, outputting the first comestible mass and the second comestible mass from the collecting device to the sizing device, and sizing the first comestible mass and the second comestible mass into a comestible sheet, the comestible sheet including the first comestible mass and the second comestible mass.

Additionally disclosed is a system for desirably forming at least one output mass, the system including a sizing device configured to size the at least one output mass into a comestible sheet of a desirable width, and a collecting device upstream of the sizing device, the collecting device including at least a first compartment and a second compartment, the first and second compartments being separated by separator, wherein the collecting device includes an exit end configured and positioned to deliver the at least one output from the first compartment and the second compartment to said sizing device.

Further disclosed is a formed chewing gum sheet including an upper layer, a lower layer distinct from the upper layer, and a center layer which is a mixture of the upper layer and lower layer.

Still further disclosed is a method for forming chewing gum, the method providing at least a first gum mass and a second gum mass, providing a first sizing roller and a second sizing roller, the first and second sizing rollers being displaced to form a sizing gap, inputting the first gum mass and the second gum mass into the gap, the first gum mass contacting the first roller and not the second roller, and the second gum mass contacting the second roller and not the first roller, and sizing the first gum mass and the second gum mass into a gum sheet of a substantially uniform thickness, the gum sheet including the first gum mass and the second gum mass.

Aspects of the invention are set out in the following clauses:
Clause 1. A method of forming chewing gum, the method comprising:
   providing a sizing device configured to size a gum mass into a gum sheet of a desirable width;
   providing a collecting device upstream of said sizing device, said collecting device including at least a first compartment and a second compartment, said first and second compartments being separated by separator;
   inputting a first gum mass into said first compartment and a second gum mass into said second compartment;
   outputting said first gum mass and said second gum mass from said collecting device to said sizing device; and
   sizing said first gum mass and said second gum mass into a gum sheet of a substantially uniform thickness, said gum sheet including said first gum mass and said second gum mass.
Clause 2. The method of clause 1, wherein said outputting includes outputting such that said first gum mass and said second gum mass arrive at said sizing device simultaneously.
Clause 3. The method of clause 1, wherein said outputting includes outputting such that said first gum mass and said second gum mass arrive at said sizing device in a stacked arrangement.
Clause 4. The method of clause 1, wherein said gum sheet is sized to include a thickness between about 0.3 mm to 10 mm, and a first layer comprising said first gum mass and a second layer comprising said second gum mass.
Clause 5. The method of clause 4, wherein said sheet is absent a mixing of said first gum mass with said second gum mass.
Clause 6. The method of clause 4, further including a mixing of said first gum mass with said second gum mass at a center region of said sheet where said first layer is adjacent said second layer.
Clause 7. The method of clause 4, wherein said first layer and said second layer are visually distinct.
Clause 8. The method of clause 6, wherein said first layer, said second layer, and said center region are visually distinct.
Clause 9. The method of clause 1, wherein said first gum mass is at least one of a different composition and different color from said second gum mass.
Clause 10. The method of clause 1, wherein said collecting device includes at least one additional compartment, the method further including
   inputting a third gum mass into said at least one additional compartment;
   outputting said first gum mass, said second gum mass, and said third gum mass from said collecting device to said sizing device; and
   sizing said first gum mass, said second gum mass, and said third gum mass into a gum sheet including said first gum mass, said second gum mass, and said third gum mass.
Clause 11. The method of clause 1, wherein said sizing device is a pair of displaced rollers.
Clause 12. The method of clause 11, wherein said sizing of said first gum mass and said second gum mass into said gum sheet includes driving the pair of rollers in opposite directions to pull said first gum mass and said second gum mass through a gap between the pair of rollers, and sizing said first gum mass and said second gum mass to form said gum sheet with said uniform thickness.
Clause 13. The method of clause 1, wherein said sizing produces said gum sheet having a width between 0.6 m and 1.2 m.
Clause 14. The method of clause 4, wherein said final thickness is between 2 mm and 6 mm.
Clause 15. The method of clause 1, wherein said first gum mass and said second gum mass have a combined thickness dimension of at least 10 times said gum sheet at said outputting.
Clause 16. A method of forming comestible, the method comprising:
   providing a sizing device configured to size a comestible mass into a comestible sheet of a desirable width;
   providing a collecting device upstream of said sizing device, said collecting device including at least a first compartment and a second compartment, said first and second compartments being separated by separator;
   inputting a first comestible mass into said first compartment and a second comestible mass into said second compartment;
   outputting said first comestible mass and said second comestible mass from said collecting device to said sizing device; and
   sizing said first comestible mass and said second comestible mass into a comestible sheet, said comestible sheet including said first comestible mass and said second comestible mass.
Clause 17. The method of clause 16, wherein said first comestible mass is a chewing gum mass, and said second comestible mass is a non-chewing gum mass.
Clause 18. The method of clause 16, wherein said second comestible mass is a plurality of inclusion pieces.
Clause 19. The method of clause 18, wherein said plurality of inclusion pieces comprise at least one of:
   gum pieces, confection pieces, fruit pieces, grain pieces and nuts or nut pieces.
Clause 20. The method of clause 17, wherein said second comestible mass is a liquid confection.
Clause 21. The method of clause 16, wherein said outputting includes outputting such that said first comestible mass and said second comestible mass arrive at said sizing device simultaneously.
Clause 22. The method of clause 16, wherein said outputting includes outputting such that said first comestible mass and said second comestible mass arrive at said sizing device in a vertically stacked arrangement.
Clause 23. The method of clause 16, wherein said comestible sheet is sized to include a thickness between about 0.3 mm to 10 mm.
Clause 24. The method of clause 17, further including at least partially pressing said second non-chewing gum mass into said chewing gum mass via said sizing.
Clause 25. The method of clause 16, wherein said collecting device includes at least one additional compartment, the method further including
   inputting a third comestible mass into said at least one additional compartment;
   outputting said first comestible mass, said second comestible mass, and said third comestible mass from said collecting device to said sizing device; and
   sizing said first comestible mass, said second comestible mass, and said third comestible mass into a comestible sheet including said first comestible mass, said second comestible mass, and said third comestible mass.
Clause 26. The method of clause 16, wherein said sizing device is a pair of vertically displaced rollers.
Clause 27. The method of clause 26, wherein said sizing of said first comestible mass and said second comestible mass into said comestible sheet includes driving the pair of rollers in opposite directions to pull said first comestible mass and said second comestible mass through a gap between the pair of rollers, and compressing said first comestible mass and said second comestible mass to form said comestible sheet.
Clause 28. The method of clause 16, wherein said sizing produces said comestible sheet having a width between 0.6 m and 1.2 m.
Clause 29. The method of clause 19, wherein said final thickness is between 2 mm and 6 mm.
Clause 30. The method of clause 16, wherein said first comestible mass and said second comestible mass have a combined thickness dimension of at least 10 times said comestible sheet at said outputting.
Clause 31. A system for desirably forming at least one output mass, the system comprising:
   a sizing device configured to size the at least one output mass into a comestible sheet of a desirable width; and
   a collecting device upstream of said sizing device, said collecting device including at least a first compartment and a second compartment, said first and second compartments being separated by separator,
   wherein said collecting device includes an exit end configured and positioned to deliver the at least one output from said first compartment and said second compartment to said sizing device.
Clause 32. A formed chewing gum sheet comprising:
   an upper layer;
   a lower layer distinct from said upper layer; and
   a center layer which is a mixture of said upper layer and said lower layer.
Clause 33. The gum sheet of clause 32, wherein said upper layer includes a first color, said lower layer includes a second color, and said center layer includes a third color that is a mixture of said first color and said second color.
Clause 34. The gum sheet of clause 32, wherein said upper layer includes a first composition, said lower layer includes a second composition, and said center layer includes a third composition that is a mixture of said first composition and said second composition.
Clause 35. The gum sheet of clause 32, wherein the gum sheet includes a final thickness.
Clause 36. The gum sheet of clause 35, wherein the gum sheet is cut into individual pieces for packaging.
Clause 37. A method for forming chewing gum, the method comprising:
   providing at least a first gum mass and a second gum mass;
   providing a first sizing roller and a second sizing roller, said first and second sizing rollers being displaced to form a sizing gap
   inputting said first gum mass and said second gum mass into said gap, said first gum mass contacting said first roller and not said second roller, and said second gum mass contacting said second roller and not said first roller; and
   sizing said first gum mass and said second gum mass into a gum sheet of a substantially uniform thickness, said gum sheet including said first gum mass and said second gum mass.
Clause 38. The method of clause 37, wherein said inputting includes inputting such that said first gum mass and said second gum mass arrive at said sizing gap simultaneously.
Clause 39. The method of clause 37, wherein said inputting includes inputting such that said first gum mass and said second gum mass arrive at said sizing gap from a collection device in a stacked arrangement.
Clause 40. The method of clause 37, wherein said gum sheet is sized to include a thickness between about 0.3 mm to 10 mm, and a first layer comprising said first gum mass and a second layer comprising said second gum mass.
Clause 41. The method of clause 40, wherein said sheet is absent a mixing of said first gum mass with said second gum mass.
Clause 42. The method of clause 40, further including a mixing of said first gum mass with said second gum mass at a center region of said sheet where said first layer is adjacent said second layer.
Clause 43. The method of clause 42, wherein said first layer and said second layer are visually distinct.
Clause 44. The method of clause 43, wherein said first layer, said second layer, and said center region are visually distinct.
Clause 45. The method of clause 37, wherein said first gum mass is at least one of a different composition and different color from said second gum mass.
Clause 46. The method of clause 37, wherein said sizing of said first gum mass and said second gum mass into said gum sheet includes driving the first and second rollers in opposite directions to pull said first gum mass and said second gum mass through said gap between the first and second rollers, and sizing said first gum mass and said second gum mass to form said gum sheet with said uniform thickness.
Clause 47. The method of clause 37, wherein said sizing produces said gum sheet having a width between 0.6 m and 1.2 m.
Clause 48. The method of clause 40, wherein said final thickness is between 2 mm and 6 mm.
Clause 49. The method of clause 37, wherein said first gum mass and said second gum mass have a combined thickness dimension of at least 10 times said gum sheet at said outputting.

### BRIEF DESCRIPTION OF THE DRAWINGS

The accompanying drawings incorporated in and forming a part of the specification embodies several aspects of the present invention and, together with the description, serve to explain the principles of the invention. In the drawings:
FIG. 1 is a schematic illustration of a gum manufacturing system according to a first embodiment;
FIG. 2 is a plan view of a hopper for use in the system;
FIG. 3 is an elevation view of the hopper of FIG. 2;
FIG. 4 is a gum flow diagram according to an exemplary embodiment
FIG. 5 is a plan view of another hopper for use in the system;
FIG. 6 is an elevation view of the hopper of FIG. 5; and
FIG. 7 is a schematic illustration of a gum manufacturing system according to a second embodiment.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

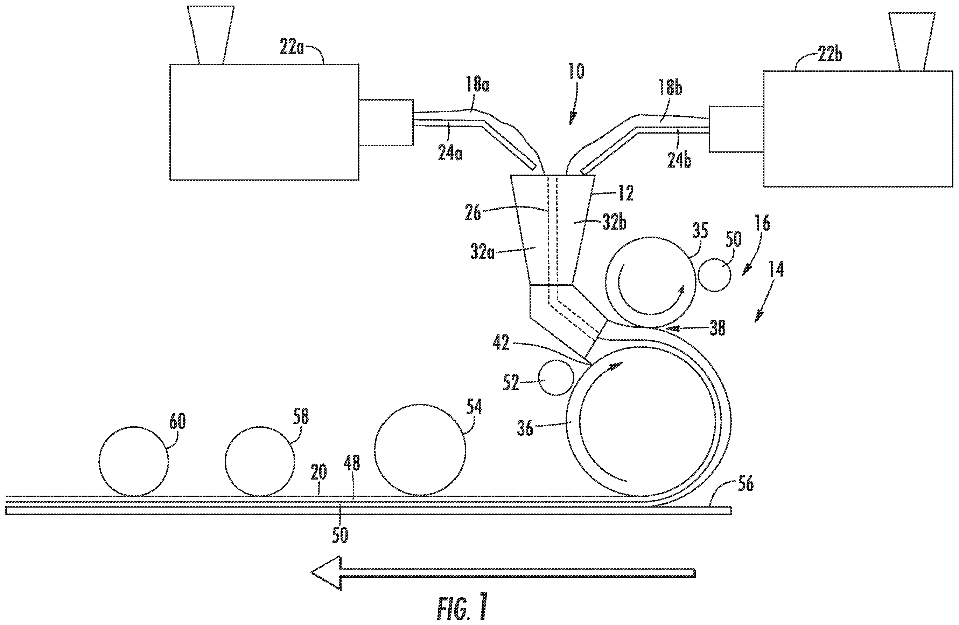

The following disclosure will detail particular embodiments according to the present disclosure, which provides improved systems for forming a multilayer chewing gum sheet. As shown in Figure 1, one such system 10 includes a divided collection device or hopper 12 and a forming device 14. In an exemplary embodiment, the forming device 14 is a set or pair of rollers 16 for forming a gum structure/mass into a continuous web or sheet having a desired thickness and a width, while optionally imparting temperature control to the gum at the same time. Rollers such as but not limited those described in United States Application No. 13/522,767, which is herein incorporated by reference in its entirety, are contemplated herein. Moving walls such as the moving walls described in United States Application No. 61/510,119, which is herein incorporated by reference in its entirety, are also contemplated.

The chewing gum included in the chewing gum mass and sheet discussed above will be referred to as "chewing gum" or "gum" and includes, but is not limited to, compositions ranging from and inclusive of compounded elastomer to finished gum, which may include compounded elastomer in addition to some compounding aids, master batch gum base, compounded elastomer in addition to some subsequent gum ingredients, compounded elastomer in addition to some gum base ingredients and some subsequent gum ingredients, gum base, gum base in addition to some subsequent gum ingredients, master batch finished gum, and finished gum. Certain compositions of chewing gum may have a non-uniform texture. Although, most of the embodiments discussed herein involve chewing gum (particularly finished chewing gum), other confectioneries and comestibles in general that do not contain an elastomeric compound can also be formed, sized and/or conditioned using the below discussed systems, such as but not limited to confection pieces, fruit pieces, grain pieces, nuts or nut pieces, and edible fluid or liquids substances. Gum pieces are also contemplated.

The system 10 is advantageously configured to efficiently and conveniently deliver product masses 18a, 18b (in the exemplary embodiment of Figure 1, chewing gum masses) to the forming device 14 in condition for forming into a multilayer gum sheet 20. This is achieved via the divided hopper 12, which, as will be discussed below, delivers the ready for forming gum masses 18a, 18b from upstream process stations 22a, 22b without requiring separate processing steps that might otherwise be needed to align the gum masses 18a, 18b for forming (such as use of extruders with specialized die heads configured for formation of multi-layer products or multiple forming devices configured for vertical stacking of the sheets produced thereby), and place an unnecessary strain on the gum components or adversely effect forming process efficiency.

As shown in Figure 1, gum mass 18a and gum mass 18b are transported to the system 10 from upstream process station(s) 22a and upstream process station(s) 22b respectively. These stations 22a, 22b may be any known gum manufacturing device employing any know process that occurs upstream of sizing or forming, such as but not limited to mixing stations and conditioning stations. Once these upstream processes are completed, the gum masses 18a, 18b, which may be the same composition/color or different compositions/colors, may be transported to the divided hopper 12 from the stations 22a, 22b.

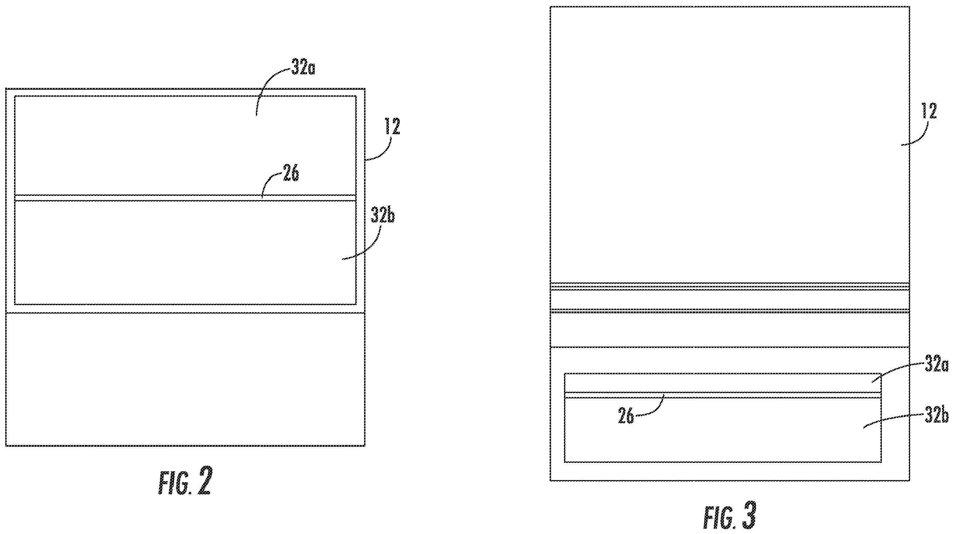

As is shown via phantom line representation in Figure 1, and in plan and elevation views in Figures 2 and 3, the divided hopper includes at least one separator 26. In an exemplary embodiment, the separator 26 extends across a width of the hopper 12, and runs continuously of from a hopper inlet 28 to a hopper outlet 30, bending along with the hopper shape (if the hopper 12 includes bends like that shown in Figure 1). As is also shown in the exemplary embodiments of Figure 1-3, the separator 26 divides the hopper 12 into at least two compartments 32a, 32b that may or may not be of substantially equal volume (though shown to include substantially equal volume in the exemplary embodiment shown in the Figures).

The gum mass enters the hopper 12 at the hopper inlet 28. More specifically, the gum mass 18a is delivered to and deposited into the compartment 32a from delivery device 24a (in this case a conveyor), and the gum mass 18b is delivered to and deposited into the compartment 32b from delivery device 24b (in this case also a conveyor). The masses 18a, 18b, which are prevented from contacting or mixing with each other by the separator 26, effectively fall through the hopper 12 via gravity (though presence of actuating rollers or other devices within the hopper 12 are also contemplated, and may be useful for moving the masses 18a, 18b through the hopper 12).

As shown in Figure 1, the hopper outlet 30 is disposed proximate the forming device 14. More specifically, the hopper outlet is disposed to deposit the gum masses 18a, 18b on a lower roller 36 of the pair of rollers 16, just upstream of a forming or sizing gap 38 between lower roller 36 and upper roller 35. Since the separator extends all the way to the hopper outlet 30 (and perhaps beyond the hopper outlet 30), the mass 18a will be deposited directly onto the lower roller 36 from compartment 32a, and the mass 18b will be deposited directly onto mass 18a from compartment 32b. Thereby, the hopper 12 effectively stacks the masses 18a, 18b (perhaps in a relatively vertical manner) for formation and sizing within the gap 38.

Once stacked as explained above, the gum masses 18a, 18b are guided by the lower roller 36 toward the upper roller 35 and gap 38 therebetween, with the distance between contact with the lower roller 36 and the gap 38 being short enough and/or streamlined enough to easily maintain the stacked nature of the masses 18a, 18b until they reach the gap 38. Notably, if the rollers 35, 36 are in the same horizontal plane, the masses may be guided to the gap via both rollers. The counter rotating upper roller 35 and lower roller 36 pull the gum masses 18a, 18b between the rollers 16 and through the gap 38 to form and size the gum masses 18a, 18b into the multilayer gum sheet 20 as will be explained in more detail below. Though other forming devices are contemplated herein, such as but not limited to traditional rolling and scoring lines and forming extruders, the system 10 will be discussed with reference to the forming rollers 16 only hereinbelow.

In the embodiment shown in Figure 1, the rollers 16 include rotational axes that are horizontally offset. The rollers 18 are also vertically offset, with the horizontal and vertical displacement of the axes and rollers themselves facilitating creation of the gap 38. Notably, the rollers do not have to be both horizontally and vertically offset to create the gap 38.

The rollers 16 and the gap 38 are configured to apply a compressive or deforming force onto the gum masses 18a, 18b to form the multilayer gum sheet 20, which has a generally uniform thickness that at least substantially corresponds to a height of the gap 38. The upper roller 35 and the lower roller 36 counter rotate to pull the gum masses 18a, 18b through the gap 38. This pulling or dragging of the masses 18a, 18b by the rollers 16 results in a drag flow of the gum through the gap 38. In the exemplary embodiment shown in FIG. 1, the upper roller 35 rotates in a counter clockwise direction, while the lower roller 36 rotates in a clockwise direction. As the gum masses 18a, 18b are pulled through the minimum distance of the gap 38, the gum masses 18a, 18b are deformed between the rollers 16, with this deforming/sizing being substantially extensional.

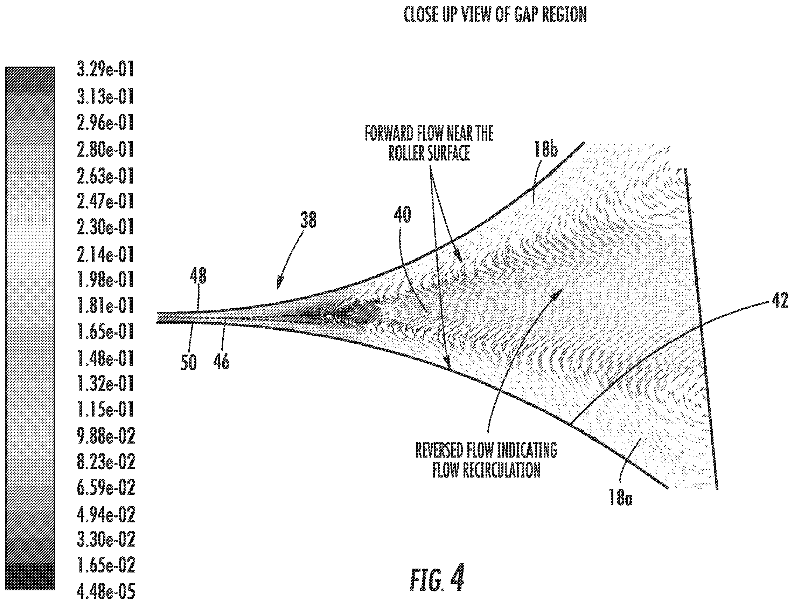

As the gum masses 18a, 18b are pulled through the gap 162, a reverse directional flow 40 may also occur at a deposit area 42 just upstream of a minimum clearance in the gap 38. This reverse flow 40 is shown via the backflow representation of Figure 4. As is illustrated in Figure 4, a pulling of the gum masses 18a, 18b through the minimum distance of the gap 38 both sizes the masses into the multilayer gum sheet 20, and may cause at least 30% of a combined cross-sectional area of the gum masses 18a, 18b in the deposit area 42 to be deflected away from the direction of flow towards the minimum distance of the gap 38 (see the arrows in Figure 4). This back flow 42 occurs at relatively interior portions of the gum masses 18a, 18b, which increases in dimension in a direction away from the gap 30 (i.e. at an area closer to the hopper 12).

More specifically, and as is shown in Figure 4, there is no or insubstantial deviation in flow direction just upstream of the gap 38. However, in areas of the masses 18a, 18b further upstream of the gap 38, a percentage in each of the gum masses 18a, 18b deflected away from the direction of flow (i.e. the back flow 40) increases. In an exemplary embodiment (that would be applicable to most conventional confectionary compositions), this area includes percentages of backflow 40 such as but not limited to approximately 30% to 75% of a cross-sectional area of the combined gum masses 18a, 18b, and more specifically 48% to 65% of the cross-sectional area. In an exemplary embodiment, backflow 40 as measured at a location along a gap center line where the separation between the rollers is 10 to 50 times the gap width will be at least 30% and at most 75%.

Back flow 40 as described above may have the effect of mixing of the gum mass 18a with the gum mass 18b in manner that creates a mixed, center region 46 of the multilayer sheet 20 where a first layer 48 is adjacent a second layer 50, with all three layers being visually distinct, and affecting a desirable appearance. Indeed, if first layer 48 is a first color or composition and second layer 50 is a second color or composition, then center layer 46 may be a mixture of the first and second colors or compositions of the first and second layers 48, 50. Of course steps may also be taken to avoid or at least reduce such mixing and creation of the visually distinct center region 46, perhaps via extension of the separator 26 to a region in the gap 38 where backflow 40 effectively ends (and there is only flow forward).

Immediately prior to being sized by the rollers 16, the gum masses 18a, 18b may be substantially unshaped except for the vertical stacking mentioned above. It should be noted that an "unshaped" gum mass may be defined as any mass that is not, in its current state, sized or formed via extrusion, deforming, or any other means, though the gum mass may have been sized or formed in such a manner prior to being in this current state. In other words, dimension of the multilayer gum sheet 20 is created independently of the shape and dimensions of the gum masses 18a, 18b, again with the exception of course of the vertical stacking. It should be noted however that the width of the exit or output from the hopper 24, the gap 30, and the sheet 13 may all be substantially the same. In addition, in an exemplary embodiment the gum masses 18a, 18b may include a combined thickness dimension of greater than 3 times the multilayer gum sheet 20, and more particularly 10-70 times the gum sheet 20, upstream of the gap 38.

In an exemplary embodiment, the rollers 16 form the gum sheet 20 to a desired thickness between about 0.3 mm to 10.0 mm via a pulling of the masses 18a, 18b through the gap 38. The pair of rollers 18 compresses and deforms the gum masses 18a, 18b to provide a generally uniform thickness, such that the thickness of the gum sheet 20 is preferably within about 20% cross-web variance, more preferably within about 10% cross-web variance, and most preferably within about a 5% cross-web variance, or less. For example, if a desired thickness of the gum sheet 20 exiting the pair of rollers 16 is 6 mm, the gap 38 (and particularly the minimum distance of the gap) between the upper and lower rollers 35, 36 is adjusted such that the thickness across the width of the gum sheet 20 is preferably between about 4.8 and 7.2 mm, and more preferably between about 5.2 and 6.6 mm. As a result, a significant degree of precision and accuracy can be accomplished with the rollers 16 for forming chewing gum. Some variance is expected with various gum recipes due to variations in bounce back and shrinkage due to variations in elasticity, viscosity and resiliency of a given gum recipe. The gum sheet 20 having a generally uniform thickness may subsequently expand in its thickness or shrink in its thickness depending on a formulation of the gum. Further, the gum sheet 20 having a generally uniform thickness may subsequently be shaped, textured, and/or printed, which may alter the generally uniform thickness.

The rollers 16 can be configured to have various diameters and widths depending on physical properties of the gum, a desired final thickness and a final width of the multilayer gum sheet 20, and a desired temperature thereof upon exiting the rollers 16. In the embodiment shown in FIG. 1, the lower roller 36 has a larger diameter than the upper roller 35. However, in other embodiments, the upper roller can have a larger diameter than the lower roller, or the rollers can have a same diameter. Desirably, the lower roller 36 has a diameter between about .5 m and 3 m and a width between about 0.6 m and 1.3 m; and the upper roller 35 has a diameter between about .25 m and 1 m with a similar width. As illustrated, preferably the roller that carries the gum for several degrees of rotation is relatively larger in diameter for certain cooling/heating and/or setting effects as discussed later on.

While narrower rollers are possible, rollers having widths between about 0.6 m and 1.3 m or wider provides the opportunity to produce a gum ribbon or sheet that is about the same in width, typically at least slightly narrower. Therefore, the rollers 16 can provide substantial gum capacity improvements over the conventional thickness reduction process involving the sizing type extruder. The pair of rollers 16 thus can provide a gum sheet 20 that is 50 mm to 50 cm or more than 50 cm in width (width of the gum sheet 13 being measured in a direction substantially perpendicular to direction of gum movement through the system 10), and 125% -300% (or more) wider gum ribbons or sheet of the finished sized gum than conventional sizing type forming extruder with progressive size reduction rollers, and as noted throughout, while using significantly less energy. The pair of rollers 18 thus can also provide a gum rope that is less than 50 mm, or 20 mm to 50 mm, and 25mm to 45 mm, with gum including a width under 50 mm being defined as rope or perhaps ribbon. Further, the hopper 12 and rollers 16 can produce a gum sheet 20 having a desired width within a relatively small variance. In one embodiment, the hopper 12 and rollers 16 can produce a gum sheet 20 having a desired width preferably within 20% variance, more preferably within 10% variance, and most preferably within 5% variance or less. With a wider gum material, the speed of gum forming process can be reduced substantially if desired while still processing the same amount of gum as traditional rolling and scoring lines or higher speeds can be used to result in greater gum volume production.

In exemplary embodiments using a pair of rollers such as the rollers 16 discussed above, it is noted that high shear extruders are avoided in forming the gum sheet 20 to its final thickness of between about 0.3 mm to 10.0 mm.

The rollers 16 may be configured to have a smooth surface finish, and be configured with any desirable actuation devices, such as but not limited to servomechanisms, to control the vertical position of the rollers relative to each other, and thereby adjust the gap 38. The upper roller 35 and the lower roller 36 can run at various rotational speeds. The rollers 16 can run at a same rotational speed or different rotational speeds. The rotational speed of each of the rollers can be selected depending on physical properties of the input gum and an amount of heat transfer desired via the rollers. In one embodiment, the lower roller 36, which is configured to have a larger diameter than the upper roller 35, runs at a higher rotational speed than the smaller upper roller. Further, a relative rotational speed of rollers 16 can be adjusted to produce desired quality of the gum sheet 20, such as surface characteristics, thickness tolerance, temperature, etc.

In an exemplary embodiment, the rollers 16 may also be configured to run at a same linear speed or at different linear speeds as measured at the surface of the rollers. In one embodiment, one roller is set at a constant linear speed, while a linear speed of the other roller can be varied ± 30% of the constant linear speed of the roller. For example, a linear speed of the lower roller 36 can be set at 3 m/min, while a linear speed of the upper roller 35 may be controlled between 2.1 m/min and 3.9 m/min. Of course, a greater surface speed of one of the rollers relative to the other will increase the relative rate of mass being moved by that roller, resulting in more mass having to be provided to the hopper compartment aligned with that roller. In such embodiment, the linear speed of the upper roller 35 may be adjusted within the set range to achieve a smoother surface of the gum and to minimize wrinkling of the gum. Alternatively, the upper roller 35 may be set at a constant linear speed, while the linear speed of the lower roller 36 may be controlled within a desired range. A linear speed of one roller can be varied relative to a linear speed of the other roller within ranges of ± 40%, ± 30%, ± 20%, or ± 10%, depending on characteristics of a gum and a desired thickness and a width of the gum sheet 13 to maximize the smoothness and minimize wrinkles and other irregularities on the gum surface. In a different embodiment, the rollers 16 having different diameters can be configured to run at a same linear speed (e.g. same speed at the tangent; but different angular speed in that the smaller roller rotates faster).

The dimensional configurations and material for the rollers 16 and support structures thereof are engineered to minimize or eliminate deflection in the rollers 16. The rollers 16 are set up to provide a generally uniform cross web spacing 38 (gap) between the rollers 16 from one end of the rollers to the other end. However, some high viscosity and/or low elasticity gum compositions can impart a high stress to the rollers 16 as the rollers deform the gum masses 18a, 18b. Some very viscous gum structures provided as at least one of the masses may require additional force, such as additional augers in the hopper 12, through the outlet 30 and into the gap 38. Such viscous gum structures can exert high stress on the rollers 16. Such stress can result in a deflection in the rollers 16, and resultant uneven spacing, and undesirable non-uniform cross-web thickness.

Thus, in one exemplary embodiment, the rollers 16 are strengthened by providing additional structural supports and/or supporting the rollers closer to the ends of the rollers to minimize or eliminate the deflection in the rollers. In one embodiment, the rollers 16 are strengthened and supported such that the maximum deflection between the rollers is maintained under 0.5 mm, preferably under 0.1 mm when processing gum mass 12 with high viscosity and/or low elasticity. Further, the roller deflection can also be minimized or eliminated by increasing a diameter of the rollers or forming the rollers from materials having increased strength or stiffness to withstand the stress imparted by the gum mass. For wider rollers, more strength or stiffness is needed to withstand the stress and a larger diameter roller can be beneficial in providing sufficient roller strength to minimize the deflection. Thus, a diameter to width ratio of the rollers is carefully selected considering physical properties of each of the gum masses 18a, 18b and desired gum sheet thickness to minimize the deflection in the rollers.

In some embodiments, wherein a viscous gum structure having a low deformability is formed via the pair of rollers strengthened to minimize the deflection, a high compressive pressure can be exerted on the gum mass, which in turn applies a high stress to the rollers.

Alternatively, physical properties of at least one of the the gum masses 18, 18b can be adjusted to minimize the deflection in the rollers 16 during the compressive forming and sizing process. For example, a temperature of the gum from one or both upstream station(s) 20a, 20b may be raised to decrease viscosity of the gum entering the pair of rollers 16. In other embodiments, one or both of the rollers 16 may be heated to transfer heat to one or both gum masses 18a, 18b, thereby decreasing viscosity and improving compressibility/formability of the gum sheet 20.

Another feature of the embodiments discussed above is that the lower roller 36 that carries the gum mass 18a over several degrees of rotation serves to transfer heat from or to the gum sheet 20 quickly and efficiently due to the relatively thin state of the gum and due to heat transfer via conduction. To facilitate the same, in one embodiment, at least the lower roller (and preferably both rollers) may be chilled or heated. In some embodiments, the rollers 16 may be provided with internal channel(s) wherein a heating or cooling fluid such as tempered water or lower freezing point fluid flows for heating or cooling the rollers. Therefore, the surface temperature of the rollers may be adjusted from about -15°C to 90 °C. In one embodiment, the surface temperature of the rollers 16 can be controlled between about 0°C-90C° by circulating a cooling fluid or heating fluid having a temperature between about 0°C-90C° within the rollers. According to one embodiment, the forming rollers are chilled to a surface temperature between about 5°C to 25C°; and preferably around 15C°. This has several advantages as reducing or eliminating later conditioning/cooling, and reducing flash off of heat sensitive ingredients such as flavors as the gum is cooled much earlier in the process. In a different embodiment, the forming rollers are heated to a surface temperature between about 40°C to 60C°, which can facilitate forming of a gum sheet and reduce thickness variation of the gum sheet.

In an exemplary embodiment, the finished gum masses 18a, 18b each having an average temperature between about 40°C-60C° is fed between the set of forming or sizing rollers 16. One or both rollers 35, 36 are heated to a surface temperature between about 30°C-70C°, more preferably between about 40°C-60C° to be closely matched to the temperature of the finished gum masses 18a, 18b. Such heating of the roller(s) facilitates forming of the gum and controls the viscosity of the gum. If the surface temperature of roller(s) 16 is too high, in some embodiments, the gum may heat and then become too sticky and stick to the roller(s). If the surface temperature of the roller(s) is too low, the local viscosity of the gum may increase to a point, wherein the gum becomes too hard for forming or may not stay on the lower roller 36. Thus, depending on a formulation of the gum, the surface temperature of the roller(s) may be set to aid in preventing the gum sticking to the roller(s), and to facilitate forming of the gum.

The web of gum formed, sized, and cooled or heated using the rollers 16 can have a temperature gradient across the thickness of the gum sheet 20. This is because the gum sheet 20, a substantial amount of which is elastomer, is not a good thermal conductor, and thus the middle portion of the gum may be at a different temperature than that of surfaces, which are in direct contact with the rollers. Such a temperature gradient can be amplified when the rollers 16 are maintained at different temperatures. For example, in one embodiment, the upper roller 35 is heated to a surface temperature of about 50°C and the lower roller 36 is chilled to a surface temperature of about 5°C, wherein the gum has an average temperature of about 40°C is formed, sized and conditioned into the gum sheet 20 having a thickness of about 2 mm. In this embodiment, the gum sheet 20 can have a large temperature gradient across layers, wherein a temperature of the gum surface in contact with the lower roller is close to the surface temperature of the lower roller of about 5°C and a temperature of the gum surface in contact with the heated upper roller is close to the surface temperature of the upper roller of about 50°C with a temperature of the gum sheet 20 therebetween varying from about 5°C to about 50°C. In such embodiments, crystallization of the chilled gum surface can be substantially different than that of the heated gum surface, as a low temperature conduction cooling of the gum sheet via the chilled roller can result in a very different crystallization compared to a slow cooled gum sheet, for example by convection. Even in embodiments, wherein both rollers 16 are chilled to a same temperature, the gum sheet 20 may have a temperature gradient across a thickness of the gum sheet, although much less than that of gum sheets 20 formed by rollers of different temperatures.

A temperature variation in an input gum entering the gum forming station 14 can have a significant impact on the temperature consistency of the gum sheet 20. This is because the temperature altering of the gum sheet 13 by conduction via the forming roller(s) 16 occurs in a fraction of time when compared to traditional cooling and conditioning of the gum via convection, which can be hours or even days. As such, the temperature variation in the input gum mass can translate into a temperature variation in the gum web that is quick cooled, for example in less than one minute, by chilled roller(s) 16. Thus, some embodiments can include measures to control a temperature variation of the input gum mass within a desired range. For example, a mixing extruder for preparing the input gum structure can be equipped with sophisticated temperature control modules to extrude the gum within the desired temperature range. In other embodiments, the gum manufacturing line 10 may include an optional conditioning unit between the upstream stations (such as mixers) and the gum forming station 14 for conditioning the masses 18a, 18b to a desired temperature range.

Chilled forming rollers 16 can effectively reduce a temperature of the relatively thin gum sheet 20 as it is carried by the chilled forming roller(s) for heat transfer. Therefore, in an exemplary embodiment, a relatively large diameter roller may be provided wherein the gum sheet 20 is carried over at least about ¼ a rotation (at least about 90 degrees and up to about 180 degrees) to provide a long residence time to facilitate heat transfer out of the gum sheet and to the chilled roller due to contact and conduction. The chilled fluid travelling through the rollers is excellent at maintaining the forming roller(s) to a surface temperature between about 5°C to 25C°; and preferably around 15C°. The chilled forming roller(s) having a cold metal surface having a high thermal conductivity works effectively to reduce the temperature of the relatively thin chewing gum, preferably having a thickness less than 10 mm; and more preferably at 0.5-6 mm, by facilitating heat transfer from the gum sheet 20 to the cold metal surface. The heat transfer roller may advantageously be one or both of the pair of forming rollers, or may also independently be a separate roller upon which gum is transferred.

In an exemplary embodiment, the upper roller 35 includes a diameter of about 0.5 meter, and the lower roller 36 includes a diameter of about 1 meter, each being cooled to around 15°C. The rollers are counter rotated to form and cool the gum masses 18a, 18b having a temperature between 40°C to 60°C at a linear speed of about 2 meters/min to provide the gum sheet 20 with a residence time on the lower roller 36 of about 1.6 min. Thereby, the temperature of the gum sheet rapidly drops to about 15 °C to 30°C. In other embodiments, the gum forming system 14 is configured to form and cool the gum sheet 20 at a line speed between about 5 meters/min to about 30 meters/min.

The rollers 16 may also provide the opportunity to eliminate dusting of the gum with talc or other particulate anti-sticking agent that are used in more conventional rolling reduction operations. This can avoid the need for dust collection equipment as used in traditional rolling and scoring lines; and can also be used to create a more aesthetically pleasing product that has more vibrant colors as dusting operations dull the final product color. Further, by eliminating the use of dusting powders, a clean up process of the gum manufacturing line 10 can be dramatically made easy, since a substantially large portion of residual mess requiring lengthy cleaning in conventional rolling and scoring lines is due to the use of powders and the large number of rollers. As such, the clean up time for a change over, which was hours, 10 hours in some conventional rolling and scoring gum lines, can be reduced to minutes according to some embodiments of the present invention. Therefore, the embodiments of the present invention can increase the productivity of the gum manufacturing line by substantially reducing clean up/change over time when compared to traditional rolling and scoring gum lines.

Turning now to an exemplary embodiment that may effectively replace the powder mentioned above, it should be appreciated that the upper roller 35 may be equipped with an oiling roller 50 to lubricate the roller with a release agent such as food quality vegetable or mineral oil, which acts to prevent sticking of the gum to the rollers. Similarly, the lower roller 36 may be equipped with an oiling roller 52 to lubricate the lower roller. Therefore, the gum forming system 14 eliminates the need of powder releasing agents such as talc or a polyol. Although each of the rollers is provided with the oiling roller in the embodiment of Figures 1, in other embodiments, only one of the upper and lower rollers may be provided with one oiling roller, or none of the rollers may be provided with an oiling roller when the rollers have a sufficiently low surface tension or adhesion to release the gum sheet 20 without aid of a releasing agent and the gum sheet 20 is sufficiently not tacky for subsequent scoring, cutting and packaging processes. Further, other lubricating systems, for example, a spray bar or a dipping basin can be used to apply a suitable liquid lubricator. The rollers may also be provided with a scrapper downstream of the gap 38 to detach the gum sheet 20 from the surface of the roller 36 onto a conveyor belt.

The upper roller 35 may also be provided with a scraper near the gap 38 to ensure the gum sheet 20 detaches from the surface of the upper roller, thereby facilitating the gum sheet 20 to travel on the lower roller. The lower roller 36 may further be provided with a scrapper near the bottom of the lower roller to detach the gum sheet 20 from the surface of the lower roller onto the conveyor belt. In some embodiments, the conveyor belt may be adapted for cooling or heating to further condition the continuous sheet of gum sheet 13 similarly to the rollers discussed above.

The system 10 may also include a smoothing roller 54 downstream of the roller 16. Upon exiting the pair of rollers gap 38, a conveyor belt 56 moves the gum sheet 20 toward the smoothing roller. The smoothing roller is arranged preferably about 0.5 m to 3 m from the lower roller 36, more preferably about 1 m - 1.5 m. The smoothing roller can remove surface imperfections, kinks, and may further reduce the thickness of the gum sheet 20, however usually any further reductions are limited to 10% or less, and thus not have an effect on the final thickness or substantially final thickness of the sheet 20 (indeed, reduction in thickness by 10% or less, for purposes of this disclosure, will not be considered to impact a "substantially" final thickness of the sheet 20), while achieving advantages in that progressive rolling reductions are not necessitated. The embodiments shown in Figures 1 and 2 output the continuous gum sheet 20 having a thickness within 10% of a desired final thickness of the final gum product (and thereby at a substantially final thickness as defined above), and the smoothing roller is configured to adjust the thickness of the gum sheet 20 by less than 10% (thus again, not having an effect on a substantially final thickness). For example, in an implementation wherein the desired final thickness of a stick gum product is 2.0 mm, the gap 38 can be adjusted such that the continuous sheet gum sheet 20 has a generally uniform thickness of about 2.1 mm. In this implementation, the smoothing roller is arranged relative to the conveyor belt 56 to remove imperfections and kinks in a manner that may reduce the generally uniform thickness to about 2.0 mm.

In the exemplary embodiment of FIG. 1 the system 10 further includes a scoring roller 58, a lateral dividing or cutting roller 60 downstream of the gap 38. The scoring roller 58 and the lateral dividing roller 60 score and divide the gum sheet 20 into individual scored sheets. The scored sheets may then be conveyed to cooling tunnel for further conditioning (though the cooling tunnel may be rendered unnecessary in light of the improved cooling capabilities provided by the rollers 16). Thereafter, the gum may be transported to further processing and packaging equipment for producing packaged gum products, perhaps in a single line with the system 10. In some embodiments, the scoring roller 58 and the dividing roller 60 may be replaced with other gum shaping solutions, such as a drop-roller, a die cutter, pelletizer or other similar gum shaping equipment (provided the sheet is cooled to a sufficient extent). As such, the gum manufacturing system 10 can produce chewing gum pieces having a final size to be cut into final shapes, such as slabs that can subsequently be packaged, or pellets that are subsequently coated.

Although the system 10 is shown as a continuous line including the upstream stations 20a, 20b in Figure 1, in other embodiments, one or more of these components of the gum manufacturing system 10 may be located in different parts of a manufacturing plant or even in a different manufacturing plant. For example, in one embodiment, one or both upstream stations 20a, 20b is located in one plant, and the gum forming system 14 and other subsequent components, such as the scoring and dividing rollers and packaging components, are located in a different plant, wherein the mixed gum masses 18a, 18b transferred from one plant to the other for subsequent processes.

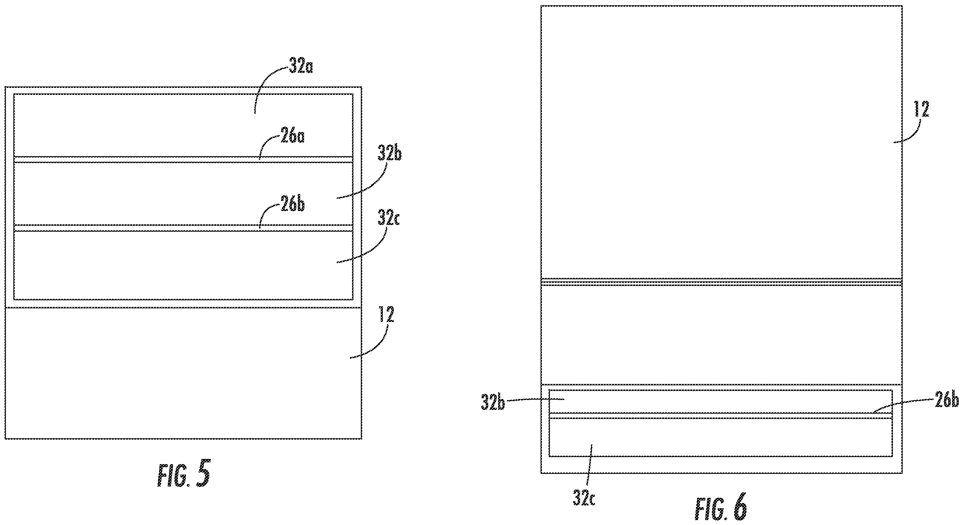

Referring now to Figures 5 and 6, it should be appreciated that the hopper 12 may include two or more separators 26a, 26b, to divide the hopper 12 into three or more compartments 36a-c that, in the exemplary embodiment of the Figures, again include substantially the same volume (though this does not necessarily have to be the case). Regardless of separator number, in addition to stacking the masses for sizing, the hopper 12 may be used for upstream surge control, capacity and feed control. The hopper 12 constrains, accumulates, and feeds the gum masses 18a, 18b (and perhaps one or more additional gum mass, particularly if there is three or more compartments) into the gap 38. The hopper 12 can be configured to receive the gum masses 18a, 18b in any desirable form, and include a width adjustable output proximate the gap 38 that is configured to accommodate any reasonably desirable width of the gum sheet 20. In an exemplary embodiment, the hopper output and rollers 16 are configured to accommodate the gum sheet 20 produced to a width of between about 25 mm to 1 m, or perhaps more. It may be desirable to have a wider sheet of the gum of greater than about 0.6 m in width so as to be able to provide a substantial gum mass volume that can operate at slower speeds while generating sufficient output.

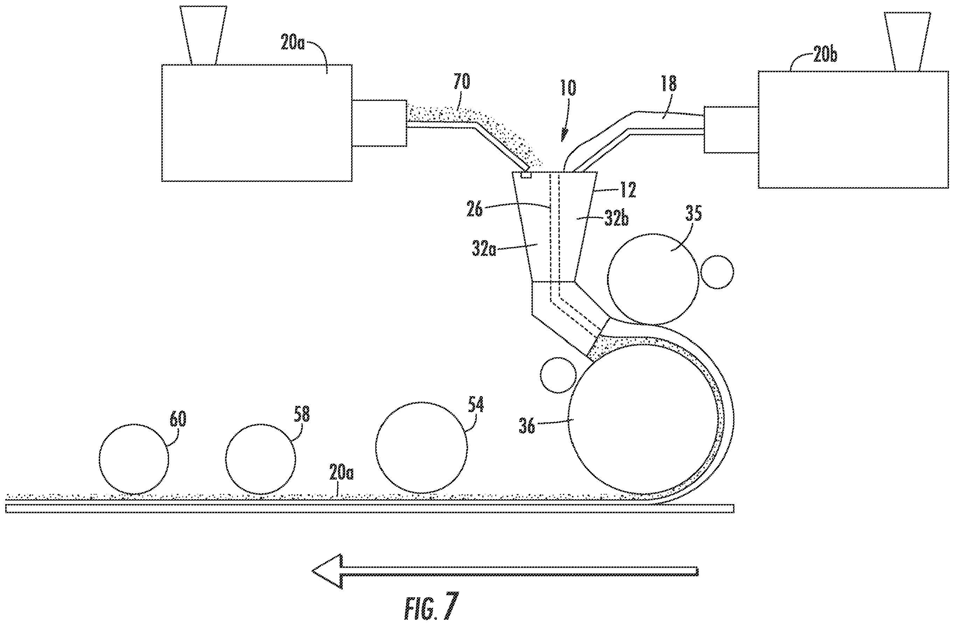

Referring now to Figure 7, the same system 10 as shown in Figure 1 is reproduced. However, in this system 10, comestible products that are not necessarily chewing gum is run through the system 10. As mentioned above, other confectioneries and comestibles in general that do not contain an elastomeric compound can also be formed, sized and/or conditioned using the systems shown in Figures 1 and 7, such as but not limited to confection pieces, fruit pieces, grain pieces, nuts or nut pieces, and edible fluid or liquid substances. Gum pieces are also contemplated. In the exemplary embodiment of Figure 7, upstream station(s) 20a produces inclusions or confectionery pieces (or a layer of inclusions or confectionery pieces) 70 for ultimate delivery to compartment 32a and the lower roller 36, while upstream station(s) 20b produces a gum mass 18 for ultimate delivery to compartment 32b and the pieces 70 on the lower roller 36. In this manner, the hopper 12 provides the rollers 16 with pieces 70 that include a gum mass 18 thereon. The mass 18 and pieces 70 pass through the gap 38 for sizing to a sheet 20a of the above discussed desirable width, and an at least partial pressing of the pieces 70 into the sheet 20a

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

**1.** A method of forming chewing gum, the method comprising:
providing a sizing device configured to size a gum mass into a gum sheet of a desirable width;
providing a collecting device upstream of said sizing device, said collecting device including at least a first compartment and a second compartment, said first and second compartments being separated by separator;
inputting a first gum mass into said first compartment and a second gum mass into said second compartment;
outputting said first gum mass and said second gum mass from said collecting device to said sizing device; and
sizing said first gum mass and said second gum mass into a gum sheet of a substantially uniform thickness, said gum sheet including said first gum mass and said second gum mass.

**2.** The method of claim 1,
- wherein said outputting includes outputting such that said first gum mass and said second gum mass arrive at said sizing device simultaneously; or
- wherein said outputting includes outputting such that said first gum mass and said second gum mass arrive at said sizing device in a stacked arrangement.

**3.** The method of claim 1, wherein said gum sheet is sized to include a thickness between about 0.3 mm to 10 mm, and a first layer comprising said first gum mass and a second layer comprising said second gum mass; and optionally:
- wherein said sheet is absent a mixing of said first gum mass with said second gum mass; or
- further including a mixing of said first gum mass with said second gum mass at a center region of said sheet where said first layer is adjacent said second layer; or
- wherein said first layer and said second layer are visually distinct.

**4.** The method of claim 1, wherein said gum sheet is sized to include a thickness between about 0.3 mm to 10 mm, and a first layer comprising said first gum mass and a second layer comprising said second gum mass; further including a mixing of said first gum mass with said second gum mass at a center region of said sheet where said first layer is adjacent said second layer; and wherein said first layer, said second layer, and said center region are visually distinct.

**5.** The method of claim 1,
- wherein said first gum mass is at least one of a different composition and different color from said second gum mass; or
- wherein said collecting device includes at least one additional compartment, the method further including
inputting a third gum mass into said at least one additional compartment;
outputting said first gum mass, said second gum mass, and said third gum mass from said collecting device to said sizing device; and
sizing said first gum mass, said second gum mass, and said third gum mass into a gum sheet including said first gum mass, said second gum mass, and said third gum mass.

**6.** The method of claim 1,
- wherein said sizing device is a pair of displaced rollers; and optionally
- wherein said sizing of said first gum mass and said second gum mass into said gum sheet includes driving the pair of rollers in opposite directions to pull said first gum mass and said second gum mass through a gap between the pair of rollers, and sizing said first gum mass and said second gum mass to form said gum sheet with said uniform thickness.

**7.** The method of claim 1,
- wherein said sizing produces said gum sheet having a width between 0.6 m and 1.2 m; or
- wherein said first gum mass and said second gum mass have a combined thickness dimension of at least 10 times said gum sheet at said outputting.

**8.** A formed chewing gum sheet comprising:
an upper layer;
a lower layer distinct from said upper layer; and
a center layer which is a mixture of said upper layer and said lower layer.

**9.** The gum sheet of claim 8,
- wherein said upper layer includes a first color, said lower layer includes a second color, and said center layer includes a third color that is a mixture of said first color and said second color; or
- wherein said upper layer includes a first composition, said lower layer includes a second composition, and said center layer includes a third composition that is a mixture of said first composition and said second composition.

**10.** The gum sheet of claim 8, wherein the gum sheet includes a final thickness; and optionally
- wherein the gum sheet is cut into individual pieces for packaging.

**11.** A method for forming chewing gum, the method comprising:
providing at least a first gum mass and a second gum mass;
providing a first sizing roller and a second sizing roller, said first and second sizing rollers being displaced to form a sizing gap
inputting said first gum mass and said second gum mass into said gap, said first gum mass contacting said first roller and not said second roller, and said second gum mass contacting said second roller and not said first roller; and
sizing said first gum mass and said second gum mass into a gum sheet of a substantially uniform thickness, said gum sheet including said first gum mass and said second gum mass.

**12.** The method of claim 11,
- wherein said inputting includes inputting such that said first gum mass and said second gum mass arrive at said sizing gap simultaneously; or
- wherein said inputting includes inputting such that said first gum mass and said second gum mass arrive at said sizing gap from a collection device in a stacked arrangement.

**13.** The method of claim 11,
- wherein said gum sheet is sized to include a thickness between about 0.3 mm to 10 mm, and a first layer comprising said first gum mass and a second layer comprising said second gum mass; and optionally either
- wherein said sheet is absent a mixing of said first gum mass with said second gum mass; and optionally
- wherein said first layer and said second layer are visually distinct;
or
- further including a mixing of said first gum mass with said second gum mass at a center region of said sheet where said first layer is adjacent said second layer; and optionally
- wherein said first layer, said second layer, and said center region are visually distinct.

**15.** The method of claim 11,
- wherein said first gum mass is at least one of a different composition and different color from said second gum mass; or
- wherein said sizing of said first gum mass and said second gum mass into said gum sheet includes driving the first and second rollers in opposite directions to pull said first gum mass and said second gum mass through said gap between the first and second rollers, and sizing said first gum mass and said second gum mass to form said gum sheet with said uniform thickness; or
- wherein said sizing produces said gum sheet having a width between 0.6 m and 1.2 m; or
- wherein said first gum mass and said second gum mass have a combined thickness dimension of at least 10 times said gum sheet at said outputting.
